# EUROPEAN PATENT SPECIFICATION

(11) **EP 2 384 556 B1**
(45) Date of publication and mention of the grant of the patent: **02.03.2016**
(21) Application number: 08875570.7
(22) Date of filing: 30.12.2008
(51) Int. Cl.: H04B 10/071

(54) **METHOD TO IDENTIFY SHARED RISK LINK GROUPS IN OPTICAL TRANSPORT SYSTEMS**
VERFAHREN ZUM IDENTIFIZIEREN VON SHARED-RISK-LINK-GRUPPEN IN OPTISCHEN TRANSPORTSYSTEMEN
PROCÉDÉ DE IDENTIFICATION DE GROUPES DE LIAISONS À RISQUE PARTAGÉ DANS DES SYSTÈMES DE TRANSPORT OPTIQUES

(43) Date of publication of application: 09.11.2011
(73) Proprietor: Xieon Networks S.à r.l., 2633 Senningerberg (LU)
(72) Inventor: GRUBER, Claus, 80336 München (DE); HOFFMANN, Marco, 81549 München (DE); MERKLE, Christian, 81377 München (DE); ROHDE, Harald, 81673 München (DE); SCHUPKE, Dominic, 80339 München (DE)
(74) Representative: Lucke, Andreas
(86) International application number: PCT/EP2008/068367
(87) International publication number: WO 2010/075893

(56) References cited:
- WO-A-2007/048226
- US-A1- 2004 190 445
- US-B1- 6 396 575
- US-B1- 7 218 851
- MIYAMURA T ET AL: "A disjoint path selection scheme based on enhanced shared risk link group management for multi-reliability service" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 4, 28 November 2005 (2005-11-28), pages 1879-1884, XP010879583 ISBN: 978-0-7803-9414-8

## Description

The invention relates to a method to identify shared risk link groups in optical transport systems, in which two optical links sharing at least one single point of failure are considered to be non-disjoint.

Most telecommunication services require high available networks. End-to-end availability of 0.99999 (5 nines) is defined in many Service Level Agreements today. In order to obtain these high available end-to-end connections resilience mechanisms are deployed that reroute the traffic around failed network elements. Network element failures are caused by a number of reasons such as wire-cuts, fires, natural disasters or misconfiguration.

In optical transport networks the very high availability can only be ensured by redundant light paths. These have to be disjoint which means that they do not share elements in the network and that they are not routed in parallel. The information about links that are non-disjoint is provided with Shared Risk Group (SRG) identifiers.

To plan backup paths in an optical transport network, the information about the disjointness of the network elements has to be available. In practical networks it is very hard or even infeasible to obtain the shred risk group data, i.e. data about network elements that are likely to fail jointly. This may be due to the complexity of a real network or that the network operators do not have the knowledge about exact locations or refrain from exchanging geographical fiber route information. As a result, SRG data is incomplete and disjointness cannot be guaranteed which leads to single points of failures and the non-fulfillment of service level agreements in the case of network element failures.

In present networks active components like optical amplifiers and transponders are often equipped with a location finding device which allows determining the exact position of the devices. Barcodes are used to bind the geographic location and unique network identifiers to the components. This information is transfered through a management protocol to a centralized location to calculate the SRGs and to verify and replace the manually entered databases used in existing networks. The difficulty of this method is to identify SRGs shorter than 100 miles which exist very often in backbone networks, for example if different fibers are installed over a bridge. In this case the SRG of two different fibers is only a couple of hundred meters long.

SRG identification according to the state of the art is known from document US-A-2004/0190445.

It is the object of the invention to automatically identify SRGs, which can be smaller than one kilometer, and to avoid the above described problems with manually maintained databases.

This objective is achieved by the features of claim 1. An embodiment of the invention is described in the dependent claims.

The idea behind this invention is to get a fingerprint of an optical link in such a way that links sharing the same network element have identical parts in the polarization characteristic of the Optical-Time-Domain-Reflectometry (OTDR) measurements. The polarization change of the reflected polarized measuring pulse due to the loss of the link, deformations or splices is analyzed and allocated to a location of the link. The location is the distance relative to the measuring point. Bended links have other polarization changes than straight links and so the location of bended parts of the optical link can be determined. The relation between the change of the polarization characteristic and locations of the lightpath of an optical link is used as a signature or fingerprint of this optical link.

Two optical links are mutually compared and if they have the same relation between the polarization characteristics and locations they are judged to be non-disjoint. The comparison may not be 100% precise but reduces the risk of non-disjointness to a high degree.

The comparison of optical links is improved if the rate of changes in the polarization in the OTDR is taken into account. If the optical fibers are laid alongside rail tracks or routed over bridges, the vibrations due to the traffic can be found in the OTDR measurements. These are strong indicators for positions in the optical link and if they match between two optical links they are probably laid in parallel and share the same risks.

The polarization state characteristic is based on measurements of the backscattered light of optical test pulses which are fed into the optical link. The polarization changes of the backscattered light is measured as Stokes Vectors from specific locations of the optical link. The Stokes Vectors possess spherical components s1 to s3. The component s3 describes the change of the state of polarization.

The optical test pulses and the backscattered light are measured with the well-known Optical-Time-Domain-Reflectomtry (OTDR) from defined network elements in the optical transport system. The OTDR can be made part of the transmission equipment of the network elements. The location of these network elements is known for the planning of the shared risk link groups.

The method to obtain fingerprints of optical links and to compare them mutually delivers information of shared risk groups when exact network topology information is not available. It avoids complicated fiber detection mechanisms.

The information about shared risk groups can be obtained even if the fiber network is not owned by the operator or is not accessible.

The method is described in more detail with the aid of the figures.
- Fig. 1: shows a shared risk group and the position of measuring equipment.
- Fig. 2: shows the hinge model of an optical link.
- Fig. 3: shows a sample measurement of the Power Spectral Density of an optical link.

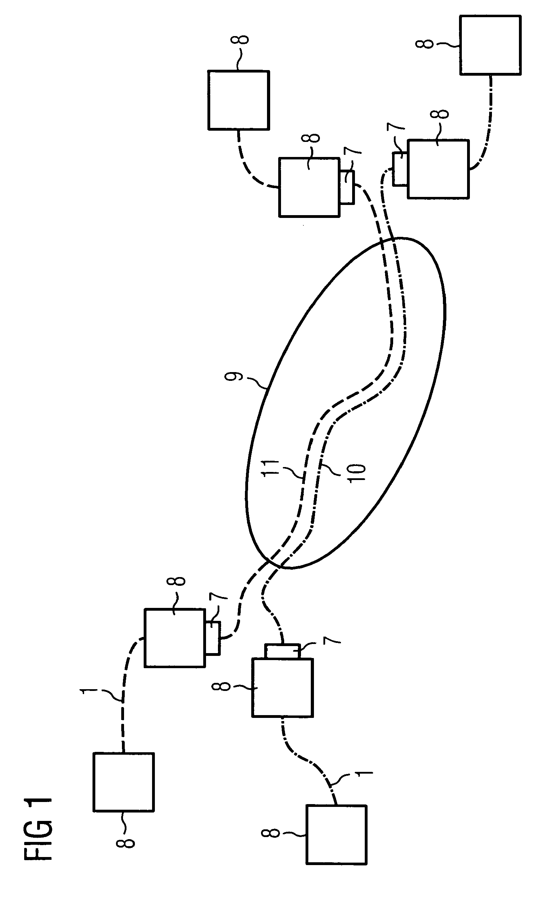

In Fig. 1 a part of an optical transport system with two optical links 1 is shown, where the part 10 and 11 of the two links 10 and 11 are routed in parallel and therefore they are part of a shared risk group 9. Some of the network elements 8 are equipped with OTDR measuring equipment 7. If the OTDR measurements of the links 10 and 11 show the same polarization state characteristic they are judged to be non-disjoint and therefore they are in the same shared risk link group.

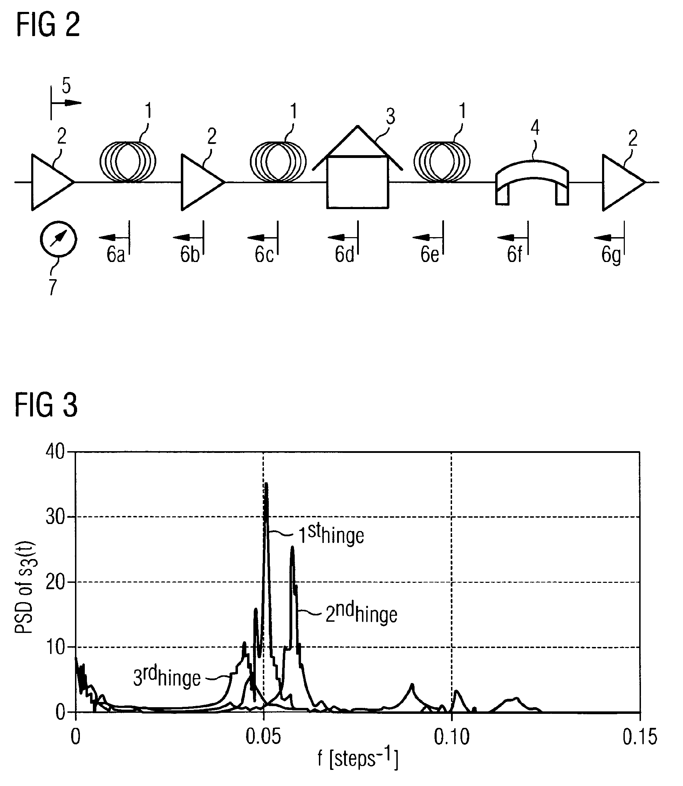

In Fig. 2 the hinge model of a sample optical link 1 is shown. The link is routed between optical amplifiers 2. In the link there are possible additional amplifiers 2, a service hut 3, and a bridge 4. From all these network elements or "hinges" in the optical link the light of the test signal 5 is backscattered, what is indicated by the arrows 6a to 6e. The backscattered light is analyzed in the OTDR measurement 7. The measured values are used to build up the fingerprint of this optical link. The measurements are even more significant if the rate of changes of the polarization of the backscattered light is analyzed. This rate of change could be very significant for vibrating hinges like a fiber which is routed over a bridge 4 or alongside a railtrack, as the traffic produces vibrations and in turn changing values in the measurements.

Fig. 3 shows a sample diagram out of the literature of a measurement of the Power Spectral Density PSD of the s3-component of the Stokes Vector. The first, second or third hinge can be clearly identified and the measured values of the optical link can be mutually compared with the values of other optical links.

### References

- 1: optical link
- 2: amplifier
- 3: service hut
- 4: bridge
- 5: test signal
- 6a..6e: reflections
- 7: OTDR measurement
- 8: network element
- 9: shared risk link group
- 10: parallel link
- 11: parallel link

- PSD: Power Spectral Density
- S3: component of Stokes vector

## Claims

1. A method to identify shared risk link groups in optical transport systems, in which two optical links sharing at least one single point of failure are considered to be non-disjoint, **characterized by** the steps of
emitting polarized test pulses into said optical links;
measuring and recording a polarization state characteristic for each link from backscattered test pulses;
comparing the polarization state characteristics of said optical links; and
judging optical links with same polarization state characteristics at a specific location of the optical links to be non-disjoint and therefore to be in a same shared risk link group.

2. The method according to claim 1, **characterized in that** the polarization state characteristic is based on measured changes of the polarization state at specific locations of the optical link.

3. The method according to claim 1, **characterized in that** the polarization state characteristic is based on a measured rate of changes of the polarization state at specific locations of the optical link.

4. The method according to claim 2 or 3, **characterized in that** the polarization state characteristic is based on Stokes Vectors.

5. The method according to one of the preceding claims, **characterized in that** the characteristics of the optical links are measured from defined network elements in the optical transport system.

6. The method according to claim 5, **characterized in that** the polarization state is measured with Optical-Time-Domain-Reflectometry.

7. The method according to claim 6, **characterized in that** the Optical-Time-Domain-Reflectometry is part of the transmission equipment in the optical transport system.

8. The method according to claim 1, **characterized in that** the defined shared risk link groups are used to plan resilient optical networks.

## Patentansprüche

1. Verfahren zum Identifizieren von Link-Gruppen mit gemeinsamem Risiko in optischen Transportsystemen, bei dem zwei optische Links, die mindestens einen einzelnen Versagenspunkt gemeinsam haben, als nicht-disjunkt betrachtet werden, **gekennzeichnet durch** die folgenden Schritte:
Emittieren von polarisierten Testpulsen in die optischen Links;
Messen und Aufzeichnen einer Polarisationszustands-Charakteristik für einen jeden Link aus den zurückgestreuten Testpulsen;
Vergleichen der Polarisationszustands-Charakteristiken der optischen Links; und
Beurteilen von optischen Links, die an einem spezifischen Ort der optischen Links dieselben Polarisationszustands-Charakteristiken aufweisen, als nicht-disjunkt und daher als Mitglieder einer selben Link-Gruppe mit gemeinsamem Risiko.

2. Verfahren nach Anspruch 1, **dadurch gekennzeichnet, dass** die Polarisationszustands-Charakteristik auf gemessenen Änderungen des Polarisationszustands an spezifischen Orten des optischen Links basiert.

3. Verfahren nach Anspruch 1, **dadurch gekennzeichnet, dass** die Polarisationszustands-Charakteristik auf einer gemessenen Rate von Änderungen des Polarisationszustandes an spezifischen Orten des optischen Links basiert.

4. Verfahren nach Anspruch 2 oder 3, **dadurch gekennzeichnet, dass** die Polarisationszustands-Charakteristik auf Stokes-Vektoren basiert.

5. Verfahren einem der vorhergehenden Ansprüche, **dadurch gekennzeichnet, dass** die Charakteristiken der optischen Links von definierten Netzwerkelementen in dem optischen Transportsystem gemessen werden.

6. Verfahren nach Anspruch 5, **dadurch gekennzeichnet, dass** der Polarisationszustand mit optischer Zeitbereichs-Reflektometrie gemessen wird.

7. Verfahren nach Anspruch 6, **dadurch gekennzeichnet, dass** die optische Zeitbereichs-Reflektometrie Teil der Übertragungsausrüstung in dem optischen Transportsystem ist.

8. Verfahren nach Anspruch 1, **dadurch gekennzeichnet, dass** die Link-Gruppen mit gemeinsamem Risiko verwendet werden, um resilierende optische Netzwerke zu planen.

## Revendications

1. Procédé pour identifier des groupes de liaisons à risque partagé dans des systèmes de transport optiques, dans lequel deux liaisons optiques partageant au moins un point unique de défaillance sont considérées comme étant non disjointes, **caractérisé par** les étapes
d'émission d'impulsions de test polarisées dans lesdites liaisons optiques ;
de mesure et d'enregistrement d'une caractéristique d'état de polarisation pour chaque liaison à partir des impulsions de test rétrodiffusées ;
de comparaison des caractéristiques d'état de polarisation desdites liaisons optiques ; et
de jugement des liaisons optiques avec les mêmes caractéristiques d'état de polarisation à un emplacement spécifique des liaisons optiques comme étant non disjointes et par conséquent comme étant dans un même groupe de liaisons à risque partagé.

2. Procédé selon la revendication 1, **caractérisé en ce que** la caractéristique d'état de polarisation est basée sur des changements mesurés de l'état de polarisation à des emplacements spécifiques de la liaison optique.

3. Procédé selon la revendication 1, **caractérisé en ce que** la caractéristique d'état de polarisation est basée sur un taux mesuré de changements de l'état de polarisation à des emplacements spécifiques de la liaison optique.

4. Procédé selon la revendication 2 ou 3, **caractérisé en ce que** la caractéristique d'état de polarisation est basée sur des vecteurs de Stokes.

5. Procédé selon l'une des revendications précédentes, **caractérisé en ce que** les caractéristiques des liaisons optiques sont mesurées à partir d'éléments de réseau définis dans le système de transport optique.

6. Procédé selon la revendication 5, **caractérisé en ce que** l'état de polarisation est mesuré par réflectométrie optique dans le domaine temporel.

7. Procédé selon la revendication 6, **caractérisé en ce que** la réflectométrie optique dans le domaine temporel fait partie de l'équipement de transmission dans le système de transport optique.

8. Procédé selon la revendication 1, **caractérisé en ce que** les groupes de liaisons à risque partagé définis sont utilisés pour planifier des réseaux optiques élastiques.
